# EUROPEAN PATENT SPECIFICATION

(11) **EP 2 577 645 B1**
(45) Date of publication and mention of the grant of the patent: **18.07.2018**
(21) Application number: 11723926.9
(22) Date of filing: 31.05.2011
(51) Int. Cl.: G09B 23/28, G09B 23/30

(54) **IV TRAINING SYSTEM**
ÜBUNGSMODELL
DISPOSITIF D'ENTRAINEMENT

(30) Priority: 31.05.2010 NO 20100783
(43) Date of publication of application: 10.04.2013
(73) Proprietor: Laerdal Medical AS, 4002 Stavanger (NO)
(72) Inventor: HOSKINS, Ian, N-4085 Hundväg (NO)
(74) Representative: Protector IP Consultants AS
(86) International application number: PCT/EP2011/058893
(87) International publication number: WO 2011/151304

(56) References cited:
- WO-A2-99/39315
- DE-U1-202004 006 035
- US-A- 5 112 228
- US-A- 5 839 904
- US-A1- 2002 168 618

## Description

### Field of the invention

The present invention relates to venipunctureing or training for venipuncturing, of blood vessels such as veins, for injection or collecting purposes. More specifically, the invention provides a pad for training of venipuncturing, and an artificial arm and a manikin equipped with such pad.

### Background of the invention and prior art

In medicine venepuncture, venopuncture or venipuncture is the process of obtaining intravenous access for the purpose of intravenous therapy or obtaining a sample of venous blood. Peripheral venipuncture is venipuncture through the skin. This procedure is performed by medical personnel. Blood is most commonly obtained from the median cubital vein, on the anterior forearm, that is the side within the fold of the elbow. This vein lies close to the surface of the skin, the nerve concentration is low and the vein is easily visible after having tightened a tourniquet around the upper arm. Other sites for venipuncture can also be used, such as the dorsum of the hand.

The uncomfort of having a venipuncture can be reduced and the quality of the process can be improved by proper training of the medical personnel. Preferably, a manikin or an artificial arm is used for the training. A number of training manikins or devices exist, providing objects for training. However, after one or a number of venipunctures the manikin or device must be replaced or repaired, which due to the typical design is a major job and expense. Typically, tubes made of latex resembling the veins and an outer skin layer, typically made of soft PVC, must be replaced. Most of the training pads or manikins on the market are not very realistic. The realism of the pad can advantageously be improved, and the properties with respect to replacement or maintenance can be improved. Therefore, a demand exists for manikins or devices that are more beneficial with respect to training of venipuncturing. Relevant background art can be found in the patent publications US 5 839 904 A, US 2002/168618 A1 and DE 20 2004 006035 U1. None of said publications teaches inflating a simulated vein as when setting a tourniquet on a patient or a pad that can be releasable compression fitted into a pad frame.

### Summary of the invention

The demand is met with the present invention.
More specifically, the invention provides a pad for training of inserting a catheter or needle into a blood vein, the pad comprises at least one fluid connector and at least one fluid passageway or bore, the fluid connector is fluidly connected to the fluid passageway or bore, the fluid passageway or bore simulates a blood vein, the fluid passageway or bore can be inflated by pressurising with a fluid through the at least one connector. The pad is distinguished in that it is shaped for releasable compression fitting into a pad frame that fits around the sides of the pad, the at least one fluid connector is on an underside of the pad, as male or female connectors, for making the connections with corresponding female or male connector parts when detachably inserting the pad into the pad frame, wherein connector parts on the underside also function as detachable fastening.

A fluid passageway is an opening for flow arranged to at least two connectors in order to allow flow of fluid through the passageway via the connectors. A fluid passageway is also a bore, but in this context a bore is arranged to only one connector, thereby not allowing fluid to flow through the bore via separate connectors. Preferably, the pad comprises several fluid passageways resembling veins, and several connectors, in order to enhance the functionality.

Preferably the pad is manufactured by a polymer material, most preferable all or at least the part over the fluid passageways is made of a self-sealing polymer material. The pad preferably has a shape resembling a part of the body typically used for peripheral venipuncture, including a skin-like upper surface and at least one fluid passageway or internal bore or opening resembling a vein. The pad has thickness sufficient to contain said passageways, it is a single detachable unit made of one piece of material or several parts or materials joined to one unit integrating the fluid passageways.

A self-sealing material is in this context defined as a material that fulfils a test in which a fluid-tight hollow member having a wall thickness of 2.5 mm inflated to apply an initial pressure of 500 mbar undergoes a pressure drop after 60 seconds to not less than 50 mbar caused by 10 punctures made by a needle having a gauge size of 16G. A self-sealing material according to the present invention can be a material made by one or more layer of a polymer or of different polymers, or can be a laminated or composite material comprising textile layer impregnated with polymeric materials, provided that it is fluid-tight in its initial state. Polymers having inherent self-sealing properties can be selected from the group consisting of: thermoplastic elastomers, silicone rubber, synthetic rubber, polyolefins, polyurethanes, polytetrafluoroethylene or other elastomers. Preferably the material is a self-sealing thermoplastic elastomer (TPE). Preferred self-sealing TPE's are styrene-ethylene-butadienestyrene (SEBS) copolymers. Good results have been achieved with Dynaflex (R) thermoplastic elastomer compounds from GLS Corporation, such as G2706-1000-00. Alternatively the material is a self-sealing silicone rubber. Preferred self-sealing silicone rubber is addition-cure silicone rubber platinum or tin catalyzed, commercially available from several suppliers.

The connectors are inlets and/or outlets, and they are preferably arranged on the underside of the pad, as male or female connectors, for making the connections with corresponding female or male connector parts when detachably inserting the pad into a pad frame.

As mentioned, the pad is shaped for releasable fitting into a pad frame that fits around the sides of the pad. The fitting can be compression fitting or snap locking or similar; preferable it is compression fitting to the sides and optionally also to the underside surface of the pad. Preferably, connector parts on the underside surface of the pad also function as detachable fastening means.

Preferably the pad is casted, moulded, slush moulded or manufactured in other ways, however, most preferably it is injection moulded from a self-sealing thermoplastic elastomer having elastic rigidity and skin-like surface resembling that of a human arm or a typical site as positioned for venipuncturing. The elastic rigidity or stiffness can conveniently be in the range 10-50 Shore A, preferably 30-40 Shore A, however convenient properties depend on what part of the body the pad is to imitate. Injection moulding is preferable for manufacturing many identical pads. Preferably the pad is made of two injection moulded parts that are joined after injection moulding, the two parts are separated at a plane containing shapes of fluid passageways simulating blood veins. Alternatively the pad is injection moulded by a two step process.

The fluid passageways simulating veins are close to the skin or upper or outer surface of the pad, and by said pressurizing the passageways or veins become more easily visible for venipuncture. Close to the skin in this context means the passageways as pressurized are visible on the top surface. Conveniently the fluid passageways resembling veins are 2-5 mm below the top surface of the pad. The pad with veins simulate a typical site for venipuncture on a human, and the shape of the pad and the layout of the veins are adapted accordingly. A number of pad designs can be readily included to allow particular training conditions, i.e. easy to find veins and difficult to find veins, and adult, child and nursing market pads. The pads can resemble the median cubital vein, on the anterior forearm, that is the side within the fold of the elbow, and back of hand, arm or leg or other possible sites for venipuncture. The pad is tubeless and easily replaceable, and it resembles body sections or sites typically used for venipuncturing, and in preferable embodiments it is inexpensive and self sealing, allowing a relatively large number of venipunctures to be made before replacement or repair is required. The pads also react much more realistic to pressure variations in the passageways for fluid, compared to prior art devices with separate tubes resembling veins. Preferably the pads include lugs for gripping, to facilitate release from the pad frame.

The invention also provides an artificial arm for training of inserting a catheter or needle into a blood vein, distinctive in that the arm comprises a replaceable pad or is adapted to have a replaceable pad inserted, the pad comprises at least one fluid connector and at least one fluid passageway or bore, the fluid connector is fluidly connected to the fluid passageway or bore, the fluid passageway or bore simulates a blood vein, the fluid passageway or bore can be inflated by pressurising with a fluid through the at least one connector. The pad is distinguished in that it is shaped for releasable compression fitting into a pad frame that fits around the sides of the pad, the at least one fluid connector is on an underside of the pad, as male or female connectors, for making the connections with corresponding female or male connector parts when detachably inserting the pad into the pad frame, wherein connector parts on the underside also function as detachable fastening.

Furthermore, the invention provides a manikin comprising means for training of inserting a catheter or needle into a blood vein, distinctive in that the means is a replaceable pad or a frame for inserting such pad, the pad comprises at least one fluid connector and at least one fluid passageway or bore, the fluid connector is fluidly connected to the fluid passageway or bore, the fluid passageway or bore simulates a blood vein, the fluid passageway or bore can be inflated by pressurising with a fluid through the at least one connector. The pad is distinguished in that it is shaped for releasable compression fitting into a pad frame that fits around the sides of the pad, the at least one fluid connector is on an underside of the pad, as male or female connectors, for making the connections with corresponding female or male connector parts when detachably inserting the pad into the pad frame, wherein connector parts on the underside also function as detachable fastening.

The pad, arm and manikin of the invention may preferably include any one or any functional combination of features as described or illustrated in this document, and all such embodiments are part of the invention.

### Drawings

The invention is illustrated by figures, of which:
Figures 1a, 1b, 1c and 1d illustrate a pad according to the invention,
Figure 2 illustrates an arm according to the invention, and
Figures 3a and 3b illustrate an arm and a pad, respectively, both according to the invention.

### Detailed description

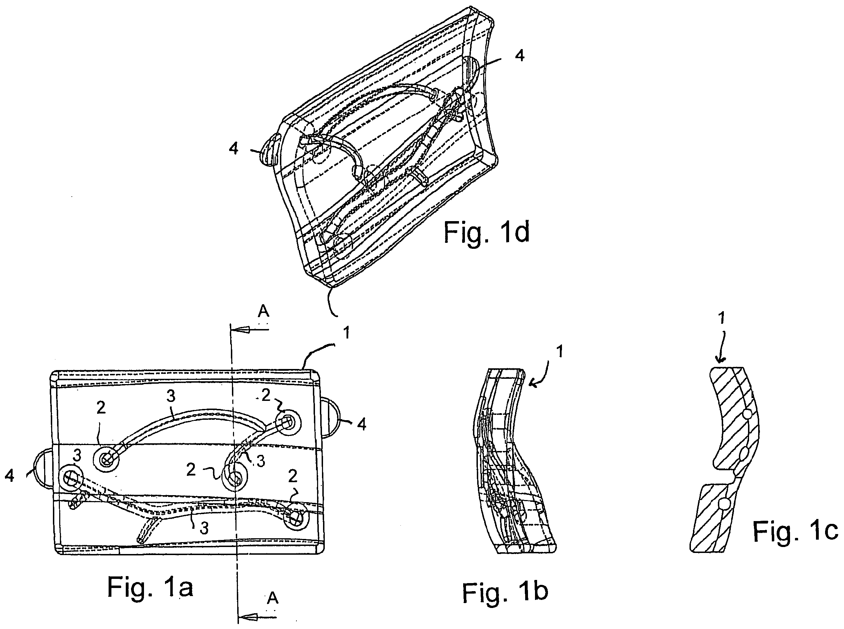

Reference is first made to Figures 1a, 1b, 1c and 1d which illustrate a pad according to the invention. More specifically, Figures 1a, 1b and 1c illustrate a pad according to the invention as seen from the underside, from the end and in cross section along the line A-A of Fig. 1a, respectively. Fig. 1d illustrates the pad in 3 dimensions as seen obliquely from the side. Hidden lines and contours are indicated by hatched lines. The illustrated embodiment of a pad 1 of the invention for training of inserting a catheter or needle into a blood vein comprises five fluid connectors 2 and three fluid passageways or bores 3. The fluid connectors are fluidly connected to the fluid passageways or bores, as they in substance are arranged to the ends of said fluid passageways or bores. The fluid passageways or bores simulates blood veins and can be inflated by pressurising with a fluid through the connectors. The pad is tubeless and it resembles a part of a body typically used for venipuncture, in this embodiment a part of the anterior forearm of a human. The shape of the pad, including the arrangement of the fluid passageways or bores resembling veins, are preferably as realistic as possible. The pad is in substance a solid or massive piece of material, however, it can be two or more parts that are joined, as indicated on Fig. 1c, for which embodiment two injection moulded self-sealing polymer parts have been joined at a plane containing the shapes of the fluid passageways or bores. The illustrated pad includes lugs 4 for gripping, to facilitate release from a pad frame.

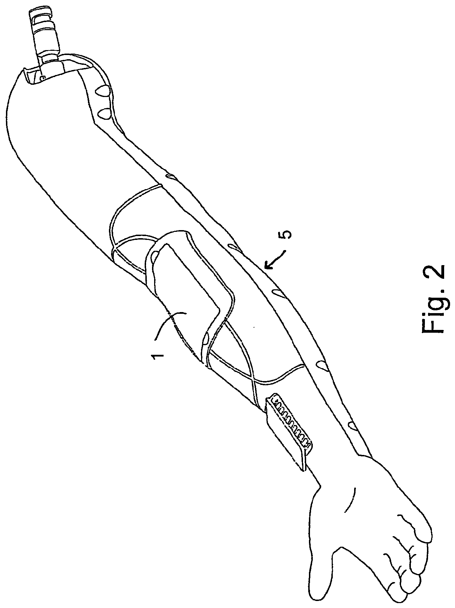

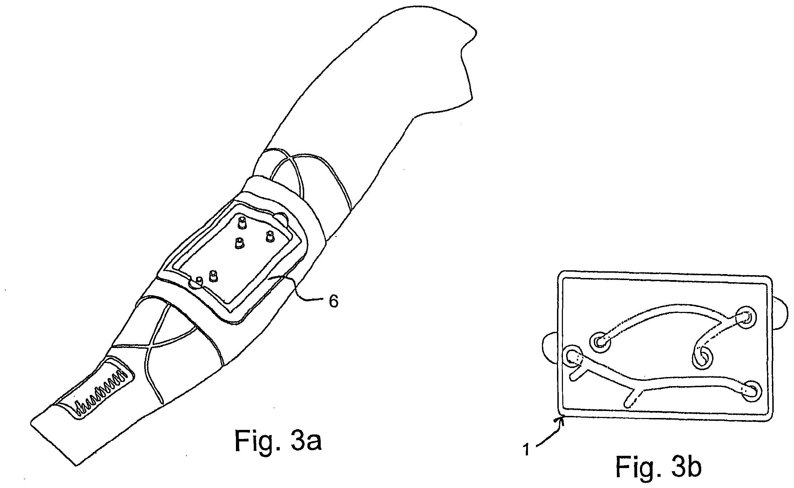

Figure 2 illustrates an arm 5 according to the invention, the arm comprises a pad 1 of the invention. Figures 3a and 3b illustrate the arm and the pad separately, of which both are according to the invention. More specifically, the arm includes a pad frame 6, into which the pad 1 can be fit by pressing it into the pad frame while at the same time the connectors are mated. The illustrated arm of the invention is adapted to have a replaceable pad inserted by including the pad frame. The pad illustrated in Fig. 3b is seen from the underside, it must be turned around before being pressed into the pad frame, and also it is not to scale. The arm illustrated on Fig. 3a includes batteries, valves and micro switches, even though this is not visible on the figure. This means that a tourniquet will not apply force to a fluid reservoir directly but it will trigger (via a switch) the opening of a valve allowing a pre-pressurized accumulator (fluid reservoir) to release "blood" into the pad. The arm also includes a restrictor to allow the pad to fill with blood in a slow, physiologically accurate way. The illustrated arm can be a part of a manikin of the invention, said manikin can inter alia include several pads of the invention resembling several parts of a body typically used for venipuncture. The pad included in or adapted to be included in the arm and manikin of the invention can be any embodiment of a pad according to the invention

## Claims

1. Pad (1) for training of inserting a catheter or needle into a blood vein, the pad comprises at least one fluid connector (2) and at least one fluid passageway or bore (3), the fluid connector is fluidly connected to the fluid passageway or bore (3), the fluid passageway or bore (3) simulates a blood vein, the fluid passageway or bore (3) can be inflated by pressurising with a fluid through the at least one connector, **characterised in that** the pad is shaped for releasable compression fitting into a pad frame (6) that fits around the sides of the pad, the at least one fluid connector (2) is on an underside of the pad, as male or female connectors, for making the connections with corresponding female or male connector parts when detachably inserting the pad into the pad frame, wherein connector parts on the underside also function as detachable fastening .

2. Pad according to claim 1, wherein the pad (1) is manufactured by a polymer material, preferably all or at least the part over the fluid passageways or bore is injection moulded from a self-sealing polymer material.

3. Pad according to claim 1 or 2, wherein the pad (1) comprises at least two connectors (2).

4. Pad according to claim 1, 2 or 3, wherein the pad (1) is injection moulded from a thermoplastic elastomer having elastic rigidity and skin-like surface resembling that of a human arm as positioned for venipuncturing.

5. Pad according to claim 4, wherein the pad (1) is made of two injection moulded parts that are joined after injection moulding, the two parts are separated at a plane containing shapes of fluid passageways simulating blood veins.

6. Artificial arm (5) for training of inserting a catheter or needle into a blood vein, **characterised in that** the arm comprises a replaceable pad (1) or is adapted to have a replaceable pad (1) inserted, the pad comprises at least one fluid connector (2) and at least one fluid passageway or bore (3), the fluid connector is fluidly connected to the fluid passageway or bore (3), the fluid passageway or bore (3) simulates a blood vein, the fluid passageway or bore (3) can be inflated by pressurising with a fluid through the at least one connector, wherein the pad is shaped for releasable compression fitting into a pad frame (6) that fits around the sides of the pad, the at least one fluid connector (2) is on an underside of the pad, as male or female connectors, for making the connections with corresponding female or male connector parts when detachably inserting the pad into the pad frame, wherein connector parts on the underside also function as detachable fastening .

7. Artificial arm (5) according to claim 6, **characterised in that** the arm comprises a pad frame (6) adapted to detachably fasten a pad (1) according to any one of claims 1-5.

8. Manikin comprising means for training of inserting a catheter or needle into a blood vein, **characterised in that** the means is a replaceable pad (1) or a frame (6) for inserting a pad, the pad comprises at least one fluid connector (2) and at least one fluid passageway or bore (3), the fluid connector is fluidly connected to the fluid passageway or bore (3), the fluid passageway or bore (3) simulates a blood vein, the fluid passageway or bore (3) can be inflated by pressurising with a fluid through the at least one connector, wherein the pad is shaped for releasable compression fitting into a pad frame (6) that fits around the sides of the pad, the at least one fluid connector (2) is on an underside of the pad, as male or female connectors, for making the connections with corresponding female or male connector parts when detachably inserting the pad into the pad frame, wherein connector parts on the underside also function as detachable fastening .

9. Manikin according to claim 8, **characterised in that** the manikin comprises several pad frames, each adapted to detachably fasten a pad according to any one of claims 1-5.

## Patentansprüche

1. Kissen (1) zum Üben des Einführens eines Katheters oder einer Nadel in eine blutdurchflossene Vene, das Kissen umfasst mindestens einen Fluid-Anschluss (2) und mindestens einen Fluid-Durchgangsweg oder eine Bohrung (3), der Fluid-Anschluss ist fluidleitend mit dem Fluid-Durchgangsweg oder der Bohrung (3) verbunden, der Fluid-Durchgangsweg oder die Bohrung (3) bildet eine blutdurchflossene Vene nach, der Fluid-Durchgangsweg oder die Bohrung (3) kann durch Druckbeaufschlagen mit einem Fluid durch den mindestens einen Anschluss aufgeblasen werden, **dadurch gekennzeichnet, dass** das Kissen für eine lösbare Pressverbindung mit einem Kissenrahmen (6) geformt ist, der um die Seiten des Kissens passt, der mindestens eine Fluid-Anschluss (2) liegt auf einer Unterseite des Kissens, als männlicher oder weiblicher Anschluss, zum Herstellen von Verbindungen mit den entsprechenden weiblichen oder männlichen Anschlussteilen, beim lösbaren Einsetzen des Kissens in den Kissenrahmen vor, wobei Anschlussteile auf der Unterseite auch als lösbare Befestigung dienen.

2. Kissen nach Anspruch 1, wobei das Kissen (1) aus einem Polymermaterial hergestellt ist, wobei vorzugsweise das ganze Kissen (1) oder mindestens der Teil über den Fluid-Durchgangswegen oder der Bohrung aus einem selbstdichtenden Polymermaterial spritzgegossen ist.

3. Kissen nach Anspruch 1 oder 2, wobei das Kissen (1) mindestens zwei Anschlüsse (2) aufweist.

4. Kissen nach Anspruch 1, 2 oder 3, wobei das Kissen (1) aus einem thermoplastischen Elastomer mit elastischer Steifigkeit und hautartiger Oberfläche spritzgegossen ist, die, bei Positionierung zur Blutabnahme, derjenigen eines menschlichen Arms gleicht.

5. Kissen nach Anspruch 4, wobei das Kissen (1) aus zwei spritzgegossenen Teilen hergestellt ist, die nach dem Spritzgießen zusammengefügt worden sind, wobei die beiden Teile in einer Ebene getrennt sind, die die Form von Fluid-Durchgangswegen aufweist, die blutdurchflossene Venen nachbilden.

6. Künstlicher Arm (5) zum Üben des Einführens eines Katheters oder einer Nadel in eine blutdurchflossene Vene, **dadurch gekennzeichnet, dass** der Arm ein austauschbares Kissen (1) aufweist oder dazu ausgelegt ist, ein eingesetztes austauschbares Kissen (1) aufzuweisen, wobei das Kissen mindestens einen Fluid-Anschluss (2) und mindestens einen Fluid-Durchgangsweg oder eine Bohrung (3) umfasst, der Fluid-Anschluss fluidleitend mit dem Fluid-Durchgangsweg oder der Bohrung (3) verbunden ist, der Fluid-Durchgangsweg oder die Bohrung (3) bildet eine blutdurchflossene Vene nach, wobei der Fluid-Durchgangsweg oder die Bohrung (3) durch Druckbeaufschlagen mit einem Fluid durch den mindestens einen Anschluss aufgeblasen werden kann, das Kissen für eine lösbare Pressverbindung mit einem Kissenrahmen (6) geformt ist, der um die Seiten des Kissens passt, wobei der mindestens eine Fluid-Anschluss (2) auf einer Unterseite des Kissens, als männlicher oder weiblicher Anschluss, zum Herstellen der Verbindungen mit den entsprechenden weiblichen oder männlichen Anschlussteilen vorliegt, wobei Anschlussteile auf der Unterseite auch als lösbare Befestigung dienen.

7. Künstlicher Arm (5) nach Anspruch 6, **dadurch gekennzeichnet, dass** der Arm einen Kissenrahmen (6) aufweist, der zur lösbaren Befestigung eines Kissens (1) nach einem der Ansprüche 1-5 ausgelegt ist.

8. Modell, aufweisend Mittel zum Üben des Einführens eines Katheters oder einer Nadel in eine blutdurchflossene Vene, **dadurch gekennzeichnet, dass** das Mittel ein austauschbares Kissen (1) oder ein Rahmen (6) zum Einsetzen eines Kissen ist, das Kissen mindestens einen Fluid-Anschluss (2) und mindestens einen Fluid-Durchgangsweg oder eine Bohrung (3) umfasst, der Fluid-Anschluss fluidleitend mit dem Fluid-Durchgangsweg oder der Bohrung (3) verbunden ist, der Fluid-Durchgangsweg oder die Bohrung (3) eine blutdurchflossene Vene nachbildet, der Fluid-Durchgangsweg oder die Bohrung (3) durch Druckbeaufschlagen mit einem Fluid durch den mindestens einen Anschluss aufgeblasen werden kann, wobei das Kissen für eine lösbare Pressverbindung mit einem Kissenrahmen (6) geformt ist, der um die Seiten des Kissens passt, wobei der mindestens eine Fluid-Anschluss (2) auf einer Unterseite des Kissens, als männlicher oder weiblicher Anschluss, zum Herstellen der Verbindungen mit den entsprechenden weiblichen oder männlichen Anschlussteilen beim lösbaren Einsetzen des Kissens in den Kissenrahmen vorliegt, wobei Anschlussteile auf der Unterseite auch als lösbare Befestigung dienen.

9. Modell nach Anspruch 8, **dadurch gekennzeichnet, dass** das Modell mehrere Kissenrahmen aufweist, die jeweils zum lösbaren Befestigen eines Kissens nach einem der Ansprüche 1-5 ausgelegt sind.

## Revendications

1. Tampon (1) d'entraînement d'insertion d'un cathéter ou d'une aiguille dans une veine sanguine, le tampon comprend au moins un connecteur de fluide (2) et au moins un passage ou orifice de fluide (3), le passage ou orifice de fluide (3) simule une veine sanguine, le passage ou orifice de fluide (3) peut être gonflé par pressurisation à l'aide d'un fluide à travers le au moins un connecteur, **caractérisé en ce que** le tampon est formé pour un raccordement libérable par compression dans un cadre de tampon (6) qui s'ajuste autour des côtés du tampon, le au moins un connecteur de fluide (2) est situé sur un côté inférieur du tampon, sous forme de connecteurs mâles ou femelles, pour réaliser les connexions avec des parties de connecteur mâles ou femelles correspondantes lorsque le tampon est inséré de manière détachable dans le cadre de tampon, des parties de connecteur sur le côté inférieur servant également de fixation détachable.

2. Tampon selon la revendication 1, dans lequel le tampon (1) est fabriqué à partir d'un matériau polymère, de préférence en totalité ou au moins la partie sur laquelle le passage ou orifice de fluide est moulé par injection à partir d'un matériau polymère auto-obturant.

3. Tampon selon la revendication 1 ou 2, dans lequel le tampon (1) comprend au moins deux connecteurs (2).

4. Tampon selon la revendication 1, 2 ou 3, dans lequel le tampon (1) est moulé par injection à partir d'un élastomère thermoplastique ayant une rigidité élastique et une surface de type peau ressemblant à celle d'un bras humain lorsque positionné pour une ponction veineuse.

5. Tampon selon la revendication 4, dans lequel le tampon (1) est constitué de deux parties moulées par injection qui sont jointes après moulage par injection, les deux parties sont séparées au niveau d'un plan contenant des formes de passages de fluide simulant des veines sanguines.

6. Bras artificiel (5) d'entraînement d'insertion d'un cathéter ou d'une aiguille dans une veine sanguine, **caractérisé en ce que** le bras comprend un tampon remplaçable (1) ou est adapté pour avoir un tampon remplaçable (1) inséré, le tampon comprend au moins un connecteur de fluide (2) et au moins un passage ou orifice de fluide (3), le connecteur de fluide est relié fluidiquement au passage ou orifice de fluide (3), le passage ou orifice de fluide (3) simule une veine sanguine, le passage ou orifice de fluide (3) peut être gonflé par pressurisation à l'aide d'un fluide à travers le au moins un connecteur, dans lequel le tampon est formé pour un raccordement libérable par compression dans un cadre de tampon (6) qui s'ajuste autour des côtés du tampon, le au moins un connecteur de fluide (2) est situé sur un côté inférieur du tampon, sous forme de connecteurs mâles ou femelles, pour réaliser les connexions avec des parties de connecteur mâles ou femelles correspondantes lorsque le tampon est inséré de manière détachable dans le cadre de tampon, des parties de connecteur sur le côté inférieur servant également de fixation détachable.

7. Bras artificiel (5) selon la revendication 6, **caractérisé en ce que** le bras comprend un cadre de tampon (6) adapté pour fixer de manière détachable un tampon (1) selon l'une quelconque des revendications 1-5.

8. Mannequin comprenant des moyens d'entraînement d'insertion d'un cathéter ou d'une aiguille dans une veine sanguine, **caractérisé en ce que** les moyens sont un tampon remplaçable (1) ou un cadre (6) pour insérer un tampon, le tampon comprend au moins un connecteur de fluide (2) et au moins un passage ou orifice de fluide (3), le connecteur de fluide est relié fluidiquement au passage ou orifice de fluide (3), le passage ou orifice de fluide (3) simule une veine sanguine, le passage ou orifice de fluide (3) peut être gonflé par pressurisation à l'aide d'un fluide à travers le au moins un connecteur, dans lequel le tampon est formé pour un raccordement libérable par compression dans un cadre de tampon (6) qui s'ajuste autour des côtés du tampon, le au moins un connecteur de fluide (2) est situé sur un côté inférieur du tampon, sous forme de connecteurs mâles ou femelles, pour réaliser les connexions avec des parties de connecteur mâles ou femelles correspondantes lorsque le tampon est inséré de manière détachable dans le cadre de tampon, des parties de connecteur sur le côté inférieur servant également de fixation détachable.

9. Mannequin selon la revendication 8, **caractérisé en ce que** le mannequin comprend plusieurs cadres de tampon, chacun étant adapté pour fixer de manière détachable un tampon selon l'une quelconque des revendications 1-5.
